# EUROPÄISCHE PATENTSCHRIFT

(11) **EP 3 058 223 B1**
(45) Veröffentlichungstag und Bekanntmachung des Hinweises auf die Patenterteilung: **02.05.2018**
(21) Anmeldenummer: 14781857.9
(22) Anmeldetag: 06.10.2014
(51) Int. Cl.: F04B 1/04

(54) **EIN HOCHDRUCKMEDIUM FÜHRENDES BAUELEMENT**
A COMPONENT WHICH CONDUCTS HIGH-PRESSURE MEDIUM
ÉLÉMENT STRUCTURAL GUIDANT UN MILIEU SOUS HAUTE PRESSION

(30) Priorität: 15.10.2013 AT 7932013
(43) Veröffentlichungstag der Anmeldung: 24.08.2016
(73) Patentinhaber: Robert Bosch GmbH, 70442 Stuttgart (DE)
(72) Erfinder: HERRMANN, Matthias, 66424 Saarbrücken (DE); SASSNICK, Hagen, A-5412 Puch (AT)
(86) Internationale Anmeldenummer: PCT/EP2014/071337
(87) Internationale Veröffentlichungsnummer: WO 2015/055452

(56) Entgegenhaltungen:
- WO-A1-2013/026273
- WO-A2-2008/116241

## Beschreibung

Die Erfindung betrifft ein Hochdruckmedium führendes Bauelement umfassend eine erste Komponente mit wenigstens einem Druckkanal und eine zweite Komponente mit einem Druckraum, wobei eine die Mündung(en) des wenigstens einen Druckkanals umgebende ringförmige Dichtfläche der ersten Komponente und eine den Rand des Druckraums umgebende ringförmige Dichtfläche der zweiten Komponente zur Ausbildung einer Dichtstelle flächig miteinander zusammenwirken, wobei die Querschnittsfläche des Druckkanals kleiner ist als die Querschnittsfläche des Druckraums.

Ein solches Bauelement kann beispielsweise als Pumpenelement für eine Common-Rail-Hochdruckpumpe ausgebildet sein. Pumpenelemente sind in der Regel mit einem Pumpenzylinder, einem Pumpenkolben und einer Ventileinheit ausgestattet, wobei die Ventileinheit ein Saugventil und ein Druckventil aufweist, bei welchen jeweils ein Saug- bzw. Druckventilglied gegen einen Saug- bzw. Druckventilsitz pressbar ist und das Saug- und das Druckventilglied in einem Ventilträger verschiebbar angeordnet sind. Beim Abwärtsgang des Pumpenkolbens wird Medium über das Saugventil aus einem Saugraum des Pumpenelements angesaugt und beim Aufwärtsgang des Pumpenkolbens wird Medium über das Druckventil ausgestoßen. Der Saugraum ist über eine Saugbohrung mit dem Saugventil verbunden und ein im Pumpenzylinder ausgebildeter Pumpenraum des Pumpenelements ist über wenigstens einen Druckkanal mit dem Druckventil verbunden. Eine die Mündungen des wenigstens einen Druckkanals umgebende ringförmige Dichtfläche des Ventilträgers und eine den Rand des Pumpenraums umgebende ringförmige Dichtfläche des Pumpenzylinders wirken zur Ausbildung einer Dichtstelle flächig miteinander zusammen.

Hochdruckpumpen werden beispielsweise in Brennkraftmaschinen eingesetzt, um Kraftstoff auf einen für das Einspritzen in den Brennraum geeigneten Druck zu bringen. Im Fall von Dieselmotoren, welche ein sogenanntes Common Rail Einspritzsystem aufweisen, ist es notwendig, den im Rail gespeicherten Hochdruckkraftstoff für alle Betriebszustände des Motors bereitzuhalten, zu welchem Zweck die Hochdruckpumpe vorgesehen ist. Um einen raschen Motorstart zu ermöglichen, muss die maximale Fördermenge der Hochdruckpumpe deutlich über der vom Motor benötigten Volllastmenge liegen. Anderseits ist aber bei Teillast oder Leerlauf des Motors nur eine geringe Fördermenge der Hochdruckpumpe erforderlich. Die Regelung der Fördermenge der Hochdruckpumpe in das Rail erfolgt über eine elektronisch gesteuerte Zumesseinheit, die in Abhängigkeit vom Kraftstoffdruck im Rail/Sammler die Zuflussmenge zur Hochdruckpumpe bestimmt. Damit wird nur die jeweils erforderliche Menge an Hochdruckkraftstoff in das Rail nachgeliefert.

Eine Hochdruckpumpe besteht aus mindestens einem Pumpenelement, das über einen Rollenstößel oder direkt von einer Nockenwelle angetrieben wird. Auf der Saugseite liefert eine Vorförderpumpe, beispielsweise eine Zahnradpumpe, den Kraftstoff mit geringem Druck aus dem Tank. Auf der Druckseite gelangt der komprimierte Kraftstoff über einen Sammler in das Leitungssystem bzw. über eine Leitung ins Rail.

Die Hochdruckpumpe arbeitet in der Regel derart, dass beim Abwärtsgang des Pumpenkolbens die von der Zumesseinheit bestimmte Kraftstoffmenge aus dem Pumpensaugraum angesaugt und anschließend beim Aufwärtsgang des Pumpenkolbens über das Druckventil in das Rail gedrückt wird. Dabei wird die Dichtstelle zwischen dem Ventilträger und dem Pumpenzylinder zyklisch durch Druckänderung belastet. Die Belastung erfolgt bei jedem Pumpvorgang, wobei die Amplitude der Belastung einer Änderung des Druckes vom Versorgungsdruck der Hochdruckpumpe (< 10 bar) auf den jeweiligen Systemdruck des Common Rail Systems (> 2.000 bar) entspricht. Auf Grund der zyklischen Druckänderung besteht die Gefahr, dass es bei jedem Pumpvorgang zu einer partiellen Unterwanderung der Hochdruckdichtfläche mit Kraftstoff und damit verbunden zu Strömungserosion kommt. Weiters kommt es auf Grund der zyklischen Druckänderung zu zyklischen Bauteilaufweitungen, die an den zusammenwirkenden Dichtflächen insbesondere dann zu Relativbewegungen führen, wenn die Bauteilaufweitung in den beteiligten Komponenten unterschiedlich stark ausfällt. Dabei kann es zum sogenannten Fretting kommen. Zusammen mit den lokal meist hohe Spannungen an den Dichtflächen und mit der Strömungserosion kann dies zu Rissbildung und Bauteilausfall führen.

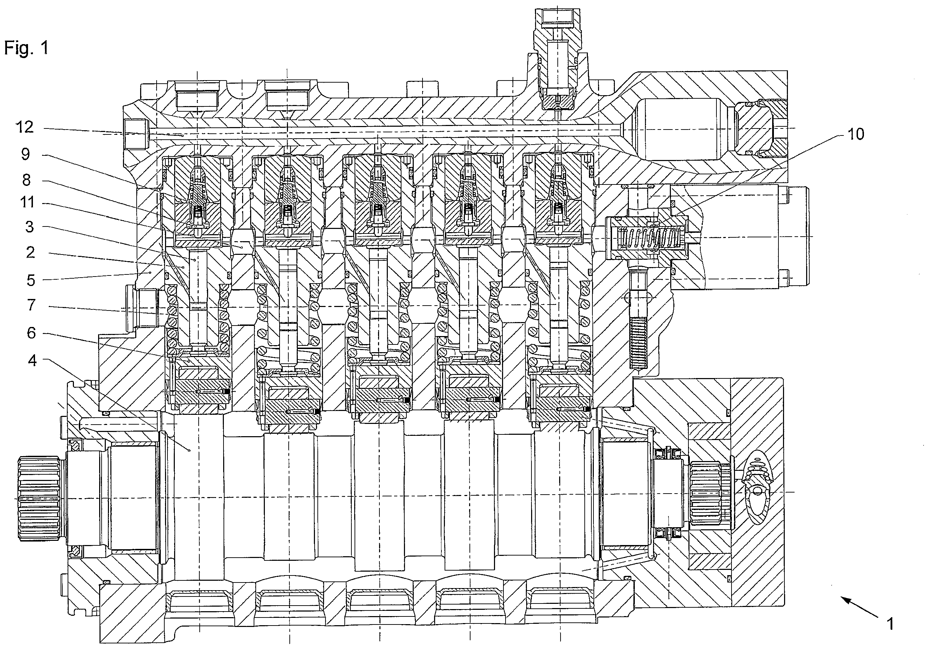

Bei Pumpenelementen gemäß dem Stand der Technik, wie sie beispielsweise in Fig. 1 dargestellt sind, wird die Unterwanderung der Dichtfläche und das Fretting einerseits durch Steifigkeitsunterschiede innerhalb des Ventilträgers und andererseits durch unterschiedliche Steifigkeiten zwischen den beiden Bauteilen (Ventilträger, Pumpenzylinder) im Bereich der Dichtfläche begünstigt. Weiters wird das Auftreten von lokal hohen Spannungen an der Hochdruckdichtstelle durch die an der Dichtfläche ausgebildete Winkelübertreibung und durch den Bearbeitungsprozess am Pumpenzylinder begünstigt.

Ein anderes derartiges Pumpenelement ist aus WO 2013/026273 bekannt. Die Erfindung zielt daher darauf ab, ein Pumpenelement derart weiterzuentwickeln, dass die Gefahr einer Strömungserosion und einer Rissbildung an der Dichtfläche verringert wird.

Zur Lösung dieser Aufgabe besteht die Erfindung, definiert durch die Ansprüche, im Wesentlichen darin, dass die druckbedingte radiale Aufweitung der ringförmigen Dichtflächen im Wesentlichen gleich ist. Dadurch wird be der zyklischen Druckbelastung eine Relativverschiebung an den Dichtflächen, d.h. ein Aneinandergleiten der beiden Dichtflächen vermieden. Vielmehr entsteht eine Art des Aneinanderabrollens der beiden Dichtflächen, sodass das sogenannte Fretting verhindert werden kann. Die druckbedingte radiale Ausdehnung der beiden Komponenten kann im Bereich der Dichtflächen durch eine Reihe von konstruktiven Maßnahmen aneinander angeglichen werden. Beispielsweise kann die Bauteilsteifigkeit einer der beiden Komponenten oder beider Komponenten angepasst werden.

Bevorzugt ist vorgesehen, dass die Mündung des wenigstens einen Druckkanals in der ersten Komponenten relativ zur ringförmigen Dichtfläche axial zurückversetzt ist. Dadurch wird erreicht, dass der Druckkanal nicht unmittelbar an der Dichtfläche mündet, sondern in einem durch den axialen Rückversatz entstehenden Zwischenraum. Bevorzugt weist der Zwischenraum hierbei eine gegenüber dem Druckkanal vergrößerte Querschnittsfläche auf, wobei der Raum von der ringförmigen Dichtfläche umgeben ist. Die Anordnung des Zwischenraums schafft einen Druckraum, in dem der anstehende pulsierende Fluidruck in radialer Richtung auf die Wand des Zwischenraums und daher im Sinne einer größeren Bauteilaufweitung wirkt als ohne Zwischenraum.

Besonders vorteilhaft kann die vorliegende Erfindung bei einem Pumpenelement für eine Common-Rail-Hochdruckpumpe verwirklicht werden. Die zweite Komponente wir dabei von einem Pumpenzylinder des Pumpenelements gebildet. Die erste Komponente wird von einem Ventilträger für das Saug- und/oder Druckventil des Pumpenelements gebildet. Der Druckraum der zweiten Komponenten wird von einem im Pumpenzylinder ausgebildeter Pumpenraum des Pumpenelements ausgebildet. Bevorzugt ist die Ausbildung in diesem Zusammenhang derart getroffen, dass das Pumpenelement mit einem Pumpenzylinder, einem Pumpenkolben und einer Ventileinheit ausgebildet ist, wobei die Ventileinheit ein Saugventil und ein Druckventil aufweist, bei welchen jeweils ein Saug- bzw. Druckventilglied gegen einen Saug- bzw. Druckventilsitz pressbar ist und das Saug- und das Druckventilglied in einem Ventilträger verschiebbar angeordnet sind, wobei beim Abwärtsgang des Pumpenkolbens Medium über das Saugventil aus einem Saugraum des Pumpenelements angesaugt wird und beim Aufwärtsgang des Pumpenkolbens Medium über das Druckventil ausgestoßen wird, wobei der Saugraum über eine den Ventilträger durchsetzende Saugbohrung mit dem Saugventil verbunden ist und ein im Pumpenzylinder ausgebildeter Pumpenraum über quer zur Saugbohrung verlaufende, im Ventilträger ausgebildete Druckkanäle mit dem Druckventil verbunden ist, wobei die die Mündungen der Druckkanäle umgebende ringförmige Dichtfläche des Ventilträgers und die den Rand des Pumpenraums umgebende ringförmigen Dichtfläche des Pumpenzylinders miteinander zusammenwirken.

Zur Angleichung der Bauteilsteifigkeit des Ventilträgers und der Pumpenzylinders kann bevorzugt vorgesehen sein, dass die zwischen der Saugbohrung und der Dichtfläche des Ventilträgers vorgesehene Materialstärke im Querschnitt gesehen mindestens dem 1,25-fachen, bevorzugt dem 1,5-fachen des Durchmessers der Saugbohrung beträgt. Dadurch, dass die zwischen der Saugbohrung und der Dichtfläche vorgesehene Materialstärke des Ventilträgers im Querschnitt gesehen im Vergleich zum Stand der Technik erhöht wird, gelingt eine Erhöhung der Steifigkeit des Ventilträgers im Bereich der Saugbohrung. Dies ist deshalb von Bedeutung, weil die Steifigkeit des Ventilträgers in diesem Bereich generell prinzipbedingt minimal ist.

Eine weitere Maßnahme besteht darin, dass am Übergang zwischen der zylindrischen Innenfläche und der Dichtfläche des Pumpenzylinders eine sich zur Dichtfläche hin erweiternde ringförmige konische oder konvexe Fläche vorgesehen ist. Dadurch wird am Übergang zwischen der zylindrischen Innenfläche und der Dichtfläche des Pumpenzylinders die Stützwirkung des Pumpenzylinders am Innendurchmesser der Dichtfläche erhöht.

Die Folge der durch die oben genannten Maßnahmen erreichte Angleichung der Bauteilsteifigkeiten ist einerseits eine Homogenisierung der Flächenpressung im Dichtbereich der Dichtflächen und andererseits eine Optimierung der Spannungsverteilung in den beiden betroffenen Bauteilen.

Die erfindungsgemäße Erhöhung der Bauteilstärke zwischen der Saugbohrung und der Dichtfläche des Ventilträgers ermöglicht es, die zum Saugraum des Pumpenelements führende Zulaufbohrung weiter oben im Saugraum einmünden zu lassen, wobei sich bevorzugt eine Ausbildung ergibt, bei der die Zulaufbohrung im Wesentlichen koaxial zur Saugbohrung verläuft.

Bei Ausführungen gemäß dem Stand der Technik ist an den miteinander zusammenwirkenden Dichtflächen meist eine Winkelübertreibung vorgesehen, um die Flächenpressung zu erhöhen, Die Winkelübertreibung ist hierbei so ausgeführt, dass die Flächenpressung am Innendurchmesser der ringförmigen Dichtfläche auftritt und nach außen hin abnimmt. Die Winkelübertreibung besteht in einer leicht konischen Ausführung, d.h. einer zum Innendurchmesser hin größer werdenden Materialverdickung, der Dichtfläche, wobei die maximale Winkelübertreibung bzw. Materialverdickung 10-20µm beträgt. Im Rahmen einer bevorzugten Ausführung der Erfindung ist abweichend vom Stand der Technik nun vorgesehen, dass die Dichtfläche des Pumpenzylinders eine Winkelübertreibung von 0-3 µm aufweist. Dadurch kann das Flächenpressungsmaximum am Innendurchmesser der Dichtfläche verringert werden, was ebenfalls zu einer Homogenisierung der Flächenpressung im Hochdruckdichtbereich führt. Mit der Reduktion des Bereichs der Winkelübertreibung von 10-20µm auf einen Bereich von 0-3 µm ergibt sich bevorzugt auch eine Einschränkung der Maßtoleranz der entsprechenden Bauteile, da der Wert der Winkelübertreibung nur mehr zwischen 0 und 3µm schwankt.

Eine weitere Reduzierung von Spannungsspitzen an den Dichtflächen ergibt sich gemäß einer bevorzugten Weiterbildung dadurch, dass die miteinander zusammenwirkenden Dichtflächen durch Schleifen bearbeitet sind. Die Verwendung eines Schleifprozesses anstelle des im Stand der Technik verwendeten Drehprozesses verbessert die durch Drehriefen hervorgerufenen Flächenpressungsspitzen. Der Bearbeitungsprozess des Schleifens begünstigt außerdem die Reduzierung der Streuung der Fertigungsmaße hinsichtlich der oben erwähnten Winkelübertreibung.

Zur Steigerung der Temperaturbeständigkeit sieht eine weitere bevorzugte Weiterbildung vor, dass der Pumpenzylinder aus dem Stahl 100Cr6 (ISO 683-17) besteht. Dieser Stahl weist folgende Zusammensetzung auf:
C: 0,93 - 1,05
Si: 0,15 - 0,35
Mn: 0,25 - 0,45
Cr: 1,35 - 1,60

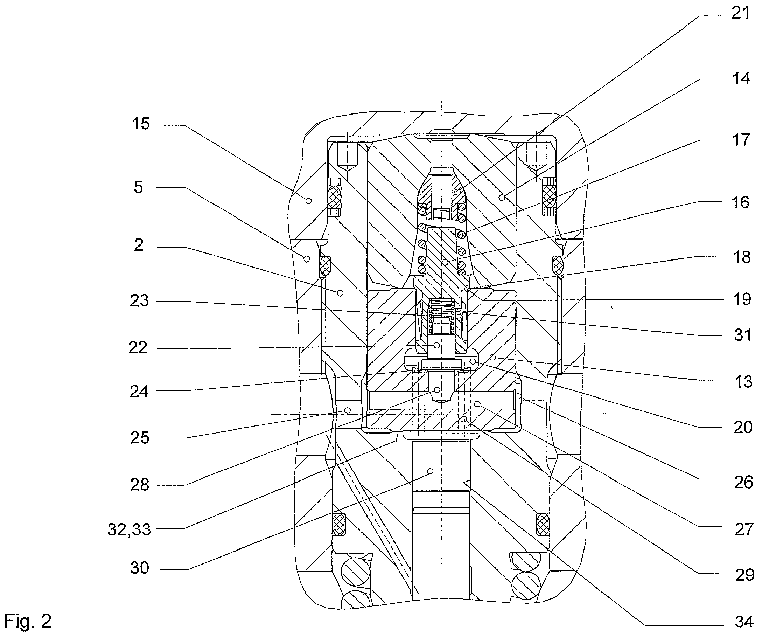

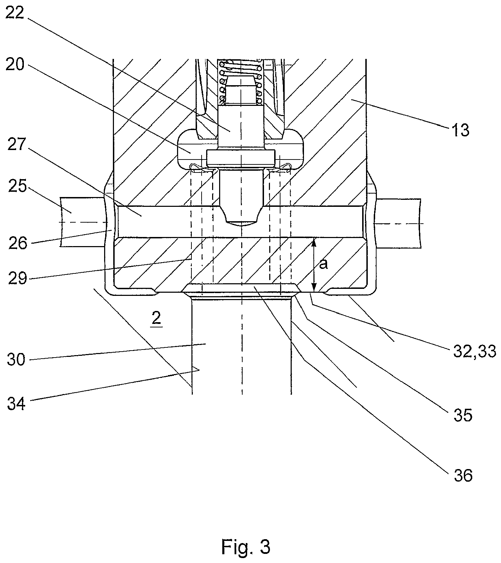

Die Erfindung wird nachfolgend anhand von in der Zeichnung schematisch dargestellten Ausführungsbeispielen näher erläutert. In dieser zeigt Fig. 1 den grundsätzlichen Aufbau einer Hochdruckpumpe nach dem Stand der Technik, Fig. 2 einen Querschnitt durch eine Ventileinheit eines Pumpenelements der Fig. 1 und Fig. 3 einen Querschnitt durch ein erfindungsgemäßes Pumpenelement.

Fig. 1 zeigt den grundsätzlichen Aufbau einer Hochdruckpumpe 1 für ein Common Rail Einspritzsystem mit fünf Pumpenelementen, bestehend aus Pumpenzylinder 2 und Pumpenkolben 3. Eine vom Verbrennungsmotor angetriebene Nockenwelle 4 ist in einem Pumpengehäuse 5 gelagert und bewegt über Rollenstößel 6 die Pumpenkolben 3 in den Pumpenzylindern 2 auf und ab. Der Kontakt zwischen Rollenstößel 6 und Nocken wird durch Druckfedern 7 aufrecht gehalten. Beim Abwärtsgang des Pumpenkolbens 3 wird über ein Saugventil 8 die von der Zumesseinheit 10 bestimmte Kraftstoffmenge aus dem rund um die Pumpenelemente in Längsrichtung des Pumpengehäuses verlaufenden Pumpensaugraum 11 angesaugt und anschließend beim Aufwärtsgang über ein Druckventil 9 in das Rail 12 gedrückt.

In Fig. 2 ist ein Querschnitt durch eine Ventileinheit entsprechend dem Stand der Technik dargestellt. In dem oberen Bereich des Pumpenzylinders 2 ist ein Ventilträger 13 und darüber ein Druckstück 14 angeordnet, welche über den mit dem Pumpengehäuse 5 verschraubten Pumpengehäusekopf 15 dichtend in den Pumpenzylinder 2 gepresst sind. Im Ventilträger 13 ist das Druckventilglied 16 axial verschiebbar geführt. Es wird durch die Druckventilfeder 17 an seinem Druckventilsitz 18 gegen die kegelige Sitzfläche 19 des Ventilträgers 13 gedrückt. Seitliche Abflachungen am Druckventilglied 16 ermöglichen einen Kraftstofffluss aus dem Ventilraum 20 in Richtung Druckventilsitz 18. Die Druckventilfeder 17 stützt sich an einem im Drückstück 14 gelagerten Federteller 21 ab. In einer Bohrung des Druckventilglieds 16 ist das Saugventilglied 22 axial verschiebbar geführt und wird durch die Saugventilfeder 23 gegen den als Flachsitz ausgeführten Saugventilsitz 24 gedrückt.

Beim Abwärtsgang des Pumpenkolbens 3 wird der von der Zumesseinheit 10 in den Pumpensaugraum 11 zugemessene Kraftstoff über die Zulaufbohrung 25 und den Elementsaugraum 26, die Saugbohrung 27 und die Zulaufbohrung 28, weiters über den sich öffnenden Saugventilsitz 24, den Ventilraum 20 und die Druckkanäle 29 in den Pumpenraum 30 oberhalb des Pumpenkolbens 3 angesaugt. Beim darauf folgenden Aufwärtsgang des Pumpenkolbens 3 schließt das Saugventil 8 und der Kraftstoff wird aus dem Pumpenraum 30 über die Druckkanäle 29, den Ventilraum 20 und die seitlichen Abflachungen am Druckventilglied 16, den sich öffnenden Druckventilsitz 18, die Zwischenräume zwischen den Windungen der Druckventilfeder 17, die Zentralbohrungen im Federteller 21 und im Druckstück 14 in das Rail 12 gedrückt. Querbohrungen 31 im Druckventilglied 16 vermeiden den Aufbau eines Druckpolsters in der die Saugventilfeder 23 beinhaltenden Bohrung oberhalb des Saugventilkörpers 22. Der Hub des Druckventilglieds 16 ist durch einen Hubanschlag am Federteller 21 begrenzt.

In Fig. 3 ist nun die erfindungsgemäße Ausbildung im Bereich der miteinander zusammenwirkenden Dichtflächen 32 und 33 des Ventilträgers 13 und des Pumpenzylinders 2 dargestellt. Es ist ersichtlich, dass die Materialstärke a zwischen der Saugbohrung 27 und der Dichtfläche 32 des Ventilträgers 13 vergrößert wurde und bevorzugt mindestens dem 1,25-fachen, bevorzugt dem 1,5-fachen des Durchmessers der Saugbohrung 27 beträgt. Weiters ist nun im Vergleich zu der Ausbildung gemäß Fig. 2 am Übergang zwischen der zylindrischen Innenfläche 34 des Pumpenzylinders 2 und der Dichtfläche 33 des Pumpenzylinders 2 eine sich zur Dichtfläche 33 hin erweiternde ringförmige konische Fläche 35 vorgesehen, sodass die Dichtfläche 33 am Innendichtdurchmesser besser unterstützt wird.

Weiters ist in Fig. 3 ersichtlich, dass die zum Saugraum 26 führende Zulaufbohrung 25 im Wesentlichen koaxial zur Saugbohrung 27 verläuft. Die Zulaufbohrung 25 wurde im Vergleich zur Fig. 2 somit nach oben gerückt, um Platz für die vergrößerte Wandstärke a des Ventilträgers 13 zu schaffen.

Schließlich münden die Druckkanäle 29 in einer im Vergleich zur Dichtflächenebene axial zurückversetzten Ebene, sodass sich ein Zwischenraum 36 ausbildet, dessen Innendurchmesser bevorzugt im Wesentlichen dem Innendurchmesser des Druckraums 30 entspricht, sodass der jeweils herrschende Fluiddruck im Ventilträger 13 und im Pumpenzylinder 2 auf gleichem Durchmesser zur Wirkung gelangt und dementsprechend eine radiale Aufweitung des Ventilträgers 13 und des Pumpenzylinders 2 in gleichem Maß bewirkt.

## Patentansprüche

1. Hochdruckmedium führendes Pumpenelement für eine Common-Rail-Hochdruckpumpe umfassend einen Ventilträger (13) mit wenigstens einem Druckkanal (29), einen Pumpenzylinder (2) mit einem Druckraum (30), einen Pumpenkolben (3) und wenigstens eine Ventileinheit, wobei die Ventileinheit ein Saugventil (8) und ein Druckventil (9) aufweist, bei welchen jeweils ein Saug- bzw. Druckventilglied (22,16) gegen einen Saug- bzw. Druckventilsitz (24,18) pressbar ist und das Saug- und das Druckventilglied (22, 16) in dem Ventilträger (13) verschiebbar angeordnet sind, wobei beim Abwärtsgang des Pumpenkolbens (3) Medium über das Saugventil (8) aus einem Saugraum (26) des Pumpenelements angesaugt wird und beim Aufwärtsgang des Pumpenkolbens (3) Medium über das Druckventil (9) ausgestoßen wird, wobei der Saugraum (26) über eine den Ventilträger (13) durchsetzende Saugbohrung (27) mit dem Saugventil (8) verbunden ist und ein im Pumpenzylinder (2) ausgebildeter Pumpenraum (30) des Pumpenelements den Druckraum ausbildet und über quer zur Saugbohrung (27) verlaufende, im Ventilträger (13) ausgebildete Druckkanäle (29) mit dem Druckventil (9) verbunden ist, wobei eine die Mündung(en) des wenigstens einen Druckkanals (29) umgebende ringförmige Dichtfläche (32) des Ventilträgers (13) und eine den Rand des Druckraums (30) umgebende ringförmige Dichtfläche (33) des Pumpenzylinders (2) zur Ausbildung einer Dichtstelle flächig miteinander zusammenwirken, wobei die Querschnittsfläche des Druckkanals (29) kleiner ist als die Querschnittsfläche des Druckraums (30), wobei die ringförmige Dichtfläche des Pumpenzylinders (2) von einer die Mündungen der Druckkanäle (29) umgebenden ringförmigen Dichtfläche (32) des Ventilträgers (13) gebildet ist und die ringförmige Dichtfläche des Ventilträgers (13) von der den Rand des Pumpenraums (30) umgebenden ringförmigen Dichtfläche (33) des Pumpenzylinders (2) ausgebildet ist, wobei die druckbedingte radiale Aufweitung der ringförmigen Dichtflächen (32,33) im Wesentlichen gleich ist, **dadurch gekennzeichnet, dass** am Übergang zwischen der zylindrischen Innenfläche (34) und der Dichtfläche (33) des Pumpenzylinders (2) eine sich zur Dichtfläche (33) hin erweiternde ringförmige konische oder konvexe Fläche (35) vorgesehen ist.

2. Pumpenelement nach Anspruch 1, **dadurch gekennzeichnet, dass** die Mündung des wenigstens einen Druckkanals (29) in dem Ventilträger (13) relativ zur ringförmigen Dichtfläche (32) axial zurückversetzt ist.

3. Pumpenelement nach Anspruch 1 oder 2, **dadurch gekennzeichnet, dass** der wenigstens eine Druckkanal (29) in einen Raum (36) mit gegenüber dem Druckkanal (29) vergrößerter Querschnittsfläche mündet, wobei der Raum (36) von der ringförmigen Dichtfläche (32) umgeben ist.

4. Pumpenelement nach einem der Ansprüche 1 bis 3, **dadurch gekennzeichnet, dass** die zwischen der Saugbohrung (27) und der Dichtfläche (32) des Ventilträgers (13) vorgesehene Materialstärke im Querschnitt gesehen mindestens dem 1,25-fachen, bevorzugt dem 1,5-fachen des Durchmessers der Saugbohrung (27) beträgt.

5. Pumpenelement nach einem der Ansprüche 1 bis 4, **dadurch gekennzeichnet, dass** eine zum Saugraum (26) führende Zulaufbohrung (25) im Wesentlichen koaxial zur Saugbohrung (27) verläuft.

6. Pumpenelement nach einem der Ansprüche 1 bis 5, **dadurch gekennzeichnet, dass** die Dichtfläche (33) des Pumpenzylinders (2) eine Winkelübertreibung von 0-3 µm aufweist.

7. Pumpenelement nach einem der Ansprüche 1 bis 6, **dadurch gekennzeichnet, dass** die miteinander zusammenwirkenden Dichtflächen (32,33) durch Schleifen bearbeitet sind.

8. Pumpenelement nach einem der Ansprüche 1 bis 7, **dadurch gekennzeichnet, dass** der Pumpenzylinder (2) aus dem Stahl 100Cr6 besteht.

## Claims

1. Pump element, which conducts high-pressure medium, for a common-rail high-pressure pump, comprising a valve carrier (13) with at least one pressure duct (29), comprising a pump cylinder (2) with a pressure chamber (30), comprising a pump piston (3), and comprising at least one valve unit, wherein the valve unit has a suction valve (8) and a pressure valve (9), in which in each case one suction and pressure valve element (22, 16) respectively can be pressed against a suction and pressure valve seat (24, 18) respectively and the suction and the pressure valve element (22, 16) are arranged in displaceable fashion in the valve carrier (13), wherein, during the downward movement of the pump piston (3), medium is drawn in via the suction valve (8) from a suction chamber (26) of the pump element and, during the upward movement of the pump piston (3), medium is discharged via the pressure valve (9), wherein the suction chamber (26) is connected to the suction valve (8) via a suction bore (27) extending through the valve carrier (13), and a pump chamber (30), formed in the pump cylinder (2), of the pump element forms the pressure chamber and is connected to the pressure valve (9) via pressure ducts (29) which run transversely with respect to the suction bore (27) and which are formed in the valve carrier (13), wherein a ring-shaped sealing surface (32), surrounding the opening-out point(s) of the at least one pressure duct (29), of the valve carrier (13) and a ring-shaped sealing surface (33), surrounding the edge of the pressure chamber (30), of the pump cylinder (2) interact areally with one another to form a sealing point, wherein the cross-sectional area of the pressure duct (29) is smaller than the cross-sectional area of the pressure chamber (30), wherein the ring-shaped sealing surface of the pump cylinder (2) is formed by a ring-shaped sealing surface (32), which surrounds the opening-out points of the pressure ducts (29), of the valve carrier (13), and the ring-shaped sealing surface of the valve carrier (13) is formed by the ring-shaped sealing surface (33), which surrounds the edge of the pump chamber (30), of the pump cylinder (2), wherein the pressure-induced radial expansion of the ring-shaped sealing surfaces (32, 33) is substantially equal, **characterized in that**, at the transition between the cylindrical inner surface (34) and the sealing surface (33) of the pump cylinder (2), there is provided a ring-shaped conical or convex surface (35) which widens in the direction of the sealing surface (33) .

2. Pump element according to Claim 1, **characterized in that** the opening-out point of the at least one pressure duct (29) in the valve carrier (13) is axially set back relative to the ring-shaped sealing surface (32) .

3. Pump element according to Claim 1 or 2, **characterized in that** the at least one pressure duct (29) opens out into a space (36) with an enlarged cross-sectional area in relation to the pressure duct (29), wherein the space (36) is surrounded by the ring-shaped sealing surface (32).

4. Pump element according to one of Claims 1 to 3, **characterized in that** the material thickness provided between the suction bore (27) and the sealing surface (32) of the valve carrier (13) as viewed in cross section amounts to at least 1.25 times, preferably 1.5 times, the diameter of the suction bore (27).

5. Pump element according to one of Claims 1 to 4, **characterized in that** a feed bore (25) leading to the suction chamber (26) runs substantially coaxially with respect to the suction bore (27).

6. Pump element according to one of Claims 1 to 5, **characterized in that** the sealing surface (33) of the pump cylinder (2) has an exaggerated angle of 0-3 µm.

7. Pump element according to one of Claims 1 to 6, **characterized in that** the interacting sealing surfaces (32, 33) are machined by grinding.

8. Pump element according to one of Claims 1 to 7, **characterized in that** the pump cylinder (2) is composed of the steel 100Cr6.

## Revendications

1. Elément de pompe conduisant un milieu haute pression pour une pompe à haute pression à rampe commune, comprenant un support de soupape (13) avec au moins un conduit de pression (29), un cylindre de pompe (2) avec un espace de pression (30), un piston de pompe (3) et au moins une unité de soupape, l'unité de soupape présentant une soupape d'aspiration (8) et une soupape de pression (9), pour lesquelles à chaque fois un organe de soupape d'aspiration, respectivement de pression (22, 16) peut être pressé contre un siège de soupape d'aspiration, respectivement de pression (24, 18), et l'organe de soupape d'aspiration et l'organe de soupape de pression (22, 16) étant disposés de manière déplaçable dans le support de soupape (13), lors du déplacement vers le bas du piston de pompe (3), le milieu étant aspiré par le biais de la soupape d'aspiration (8) hors d'un espace d'aspiration (26) de l'élément de pompe et lors du déplacement vers le haut du piston de pompe (3), le milieu étant refoulé par le biais de la soupape de pression (9), l'espace d'aspiration (26) étant relié à la soupape d'aspiration (8) par le biais d'un alésage d'aspiration (27) traversant le support de soupape (13) et un espace de pompe (30) de l'élément de pompe, réalisé dans le cylindre de pompe (2), constituant l'espace de pression et étant relié à la soupape de pression (9) par le biais de conduits de pression (29) s'étendant transversalement à l'alésage d'aspiration (27), réalisés dans le support de soupape (13), une surface d'étanchéité annulaire (32) du support de soupape (13), entourant la ou les embouchures de l'au moins un conduit de pression (29) et une surface d'étanchéité annulaire (33) du cylindre de pompe (2) entourant le bord de l'espace de pression (30) coopérant l'une avec l'autre à plat pour réaliser une zone d'étanchéité, la surface en section transversale du conduit de pression (29) étant plus petite que la surface en section transversale de l'espace de pression (30), la surface d'étanchéité annulaire du cylindre de pompe (2) étant formée par une surface d'étanchéité annulaire (32) du support de soupape (13) entourant les embouchures des conduits de pression (29) et la surface d'étanchéité annulaire du support de soupape (13) étant réalisée par la surface d'étanchéité annulaire (33) du cylindre de pompe (2) entourant le bord de l'espace de pompe (30), l'élargissement radial causé par la pression des surfaces d'étanchéité annulaires (32, 33) étant essentiellement identique, **caractérisé en ce qu'**au niveau de la transition entre la surface interne cylindrique (34) et la surface d'étanchéité (33) du cylindre de pompe (2) est prévue une surface annulaire conique ou convexe (35) s'élargissant vers la surface d'étanchéité (33) .

2. Élément de pompe selon la revendication 1, **caractérisé en ce que** l'embouchure de l'au moins un conduit de pression (29) dans le support de soupape (13) est en retrait axialement par rapport à la surface d'étanchéité annulaire (32).

3. Élément de pompe selon la revendication 1 ou 2, **caractérisé en ce que** l'au moins un conduit de pression (29) débouche dans un espace (36) ayant une plus grande surface en section transversale par rapport au conduit de pression (29), l'espace (36) étant entouré par la surface d'étanchéité de forme annulaire (32).

4. Élément de pompe selon l'une quelconque des revendications 1 à 3, **caractérisé en ce que** l'épaisseur de matériau prévue entre l'alésage d'aspiration (27) et la surface d'étanchéité (32) du support de soupape (13), vu en section transversale, vaut au moins 1,25 fois, de préférence 1,5 fois le diamètre de l'alésage d'aspiration (27).

5. Élément de pompe selon l'une quelconque des revendications 1 à 4, **caractérisé en ce qu'**un alésage d'alimentation (25) conduisant à l'espace d'aspiration (26) s'étend essentiellement coaxialement à l'alésage d'aspiration (27).

6. Élément de pompe selon l'une quelconque des revendications 1 à 5, **caractérisé en ce que** la surface d'étanchéité (33) du cylindre de pompe (2) présente un dépassement angulaire de 0-3 µm.

7. Élément de pompe selon l'une quelconque des revendications 1 à 6, **caractérisé en ce que** les surfaces d'étanchéité coopérant l'une avec l'autre (32, 33) sont usinées par meulage.

8. Élément de pompe selon l'une quelconque des revendications 1 à 7, **caractérisé en ce que** le cylindre de pompe (2) se compose d'acier 100Cr6.
